(19) Europäisches Patentamt
European Patent Office
Office européen des brevets

(11) **EP 3 823 247 B1**

(12) **EUROPEAN PATENT SPECIFICATION**

(45) Date of publication and mention
of the grant of the patent:
**01.01.2025 Bulletin 2025/01**

(21) Application number: **19209607.1**

(22) Date of filing: **15.11.2019**

(51) International Patent Classification (IPC):
***H04L 69/04*** *(2022.01)* ***H04L 67/12*** *(2022.01)*

(52) Cooperative Patent Classification (CPC):
**H04L 67/12; H04L 69/04**

(54) **METHOD AND SYSTEM FOR PROCESSING SENSOR DATA FOR TRANSMISSION**

VERFAHREN UND SYSTEM ZUR VERARBEITUNG VON SENSORDATEN ZUR ÜBERTRAGUNG

PROCÉDÉ ET SYSTÈME DE TRAITEMENT DE DONNÉES DE CAPTEUR POUR TRANSMISSION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**19.05.2021 Bulletin 2021/20**

(73) Proprietor: **ABB Schweiz AG
5400 Baden (CH)**

(72) Inventors:
• **Schoenborn, Sandro
4059 Basel (CH)**

• **Oriol, Manuel
8005 Zurich (CH)**
• **Orman, Maciej
32-052 Radziszow, Malopolskie (PL)**

(74) Representative: **Zimmermann & Partner
Patentanwälte mbB
Postfach 330 920
80069 München (DE)**

(56) References cited:
**EP-A2- 1 770 853**     **AU-A4- 2019 100 541**
**US-A1- 2013 073 261**     **US-A1- 2018 091 630**

**Description**

FIELD OF THE INVENTION

The invention relates to sensors that can be used in industrial systems, electric power systems, transportation systems, vessels, or other systems. The invention relates to techniques for efficiently compressing sensor data for transmission.

BACKGROUND OF THE INVENTION

Industrial systems electric power systems, transportation systems, or vessels are frequently equipped with sensors in the field that collect and transmit sensor data. Such sensor data are required for remote analytics and/or predictive maintenance solutions, which require current data from monitored devices.

In order to improve the quality of for remote analytics and/or predictive maintenance solutions, it is typically desirable that as much sensor data as possible is provided by each sensor to the analytics computing system. This also provides maximum flexibility, e.g., when the analytics algorithms are updated. In such a case, sensor devices deployed in-field typically transmit complete measurement data sets if they work on unrestricted energy and bandwidth, thereby enabling rich analysis at the remote end, e.g. condition monitoring, trend analysis and predictive maintenance. With an increasing number of sensor devices, that may include battery-powered sensor devices deployed in the field, this may not always be feasible in view of bandwidth and/or power constraints.

In restricted energy situations, such as sensor devices on battery power that have a wireless interface, or in restricted bandwidth situation, the sensor devices could be adapted such that they measure or calculate only a pre-defined, but restricted set of a few important parameters locally on the device. The sensor devices then only transmit these values to save power and bandwidth due to high energy demands of, e.g., wireless data transmission.

When only an invariant, pre-defined set of relevant values can be calculated and transmitted by the sensor devices, this may result in various shortcomings. For illustration, when analytics services are updated and require other value, firmware updates may have to be performed in the sensor devices, which adds to the operating costs. The information locally available at the sensor device may not include fleet data across several sensor devices and/or past data, which may make it challenging to identify the relevant values in the sensor devices.

Multiple strategies exist to reduce data transmission. Such techniques include compression, lower quality signal acquisition, and high-interest event recording.

US 2010/0325132 A1 discloses a receiver component that receives a query that pertains to a raw time-series signal.

M.A. Razzaque, C. Bleakley, and S. Dobson. "Compression in wireless sensor networks: A survey and comparative evaluation." ACM Transactions on Sensor Networks (TOSN) 10.1 (2013): 5 provides a survey of compression frameworks in wireless sensor networks.

T. Srisooksai, K. Keamarungsi, P. Lamsrichan, and K. Araki, "Practical data compression in wireless sensor networks: A survey," Journal of Network and Computer Applications, vol. 35, no. 1, pp. 37-59, Jan. 2012 describes data compression approaches in wireless sensor networks.

US 2018/0091630 A1 discloses a wearable device to compress sensor data. The wearable device includes circuitry to sense sensor data, and a communication circuit to receive, from a remote device, a detected link quality of a low-power communication channel used to communicate with the remote device. The communication circuit is operative to transmit compressed data to the remote device over the low power communication channel. The wearable device may further include a compressible sensor data module to apply a compression algorithm to compress received sensor data based on the detected link quality to provide the compressed sensor data.

US 2013/0073261 A1 discloses a distributed processing system for sensor data.

AU 2019/100541 A4 discloses systems and methods for gathering data from a plurality of sensors integrated into or attached to an internet of things (IoT) device.

EP 1 770 853 A2 discloses techniques for managing an intelligent motor in an architecture in which information is transferred between a power management device and the intelligent motor.

Various drawbacks are associated with conventional techniques. General-purpose compression methods may not be efficient as they focus on complete high-fidelity signal reconstruction, including irrelevant details. Such general-purpose compression methods may sometimes not achieve very high compression ratios.

A general reduction of sampling rate or resolution is coupled with a reduced measurement quality.

Identifying high-interest events at the sensor device typically requires more elaborate processing on the sensor device may be challenging. For illustration, high-interest events may sometimes be identified only within the context of a fleet or history, i.e. remotely.

There is a continued need in the art for improved methods, devices, and systems for processing sensor data for transmission.

SUMMARY

It is an object of the invention to provide improved techniques for processing sensor data for transmission. It is an object of the invention to provide techniques that allow data compression to be performed, while affording adaptability that allows the sensor device to be responsive to changes in the field. It is an object of the invention to provide techniques that allow data compression to be performed when the sensor data represent data that are measured on a machine having a component operating at a characteristic frequency, such as a rotating component of a motor or generator, or on a component that is coupled to such a machine.

A method and a device as recited in the independent claims are provided. The dependent claims define embodiments.

Embodiments of the invention provide devices that are adapted to compress a spectral representation of the sensor data, i.e., a frequency-domain representation of the sensor data. The compression technique is controlled as a function of and in dependence on an operational parameter of a machine. The operational parameter may be a parameter of the running machine that undergoes changes during operation of the machine. The rotation speed of a motor or generator is an example for such an operational parameter.

The compression allows reducing the amount of data to be transmitted and therefore to save energy. With strong compression, most of the relevant information in the acquired data can be transferred to a computer for performing analytics or other processing, without relying on transmitting only predefined parameters that are computed according to invariable processing algorithms. Thus, later analysis has access to more information than in the case of predefined parameters calculated only on sensor devices according to invariable processing algorithms.

The sensor devices and methods according to the present invention provide compression methods that are adaptive to operational properties of a rotating machine, e.g. its rotating speed. Additionally or alternatively, specific fault cases (e.g. based on history), specific application type (e.g. wastewater pumping, fan, wind turbine), and/or specific ambient conditions (e.g. device mounted on a boat or train) of the machine may be taken into account when controlling how compression is performed.

By using information from a running machine to control the compression, the compression can be more efficient for this specific case (i.e., for the specific operational condition(s) and optionally other machine characteristics). Compression ratios that would not be achievable with a general-purpose compression algorithm can be attained.

The compression may also be controlled based on a feedback signal from a remote computer. For illustration, the compression can be controlled, based on the feedback signal, so as to support reconstruction of a signal that is informative with respect to derived key performance indicator (KPI) values or required analytics at the remote end of the transmission path.

A method of processing sensor data comprises applying, by at least one processing device, a compression technique to a spectral representation of the sensor data to generate a compressed sensor data representation. The applied compression technique is dependent on one or several operational parameters of a machine having a rotating component. The one or several operational parameters of the machine are distinct from the sensor data. The at least one processing device transmits the compressed sensor data representation.

The sensor data may be time-domain data. The method may further comprise generating the spectral representation of the sensor data by transforming the time-domain data into a frequency domain.

The method may further comprise modifying the applied compression technique responsive to a trigger event. The trigger event may be expiry of a timer, a change in the operational parameter, or receipt of feedback relating to the quality of a signal reconstructed from the compressed sensor data representation.

The one or several operational parameters of the machine may comprise a rotation speed of the rotating component of the machine.

The method may further comprise modifying the applied compression technique responsive to a change in the rotation speed.

The applied compression technique may be further dependent on one or several machine specifics of the machine.

The one or several machine specifics may be dependent on which possible fault cases can occur. The information on possible fault cases may be based on historical sensor data. For illustration, reference spectra representing a set of several fault cases may be stored in the sensor device and may be used when executing the compression algorithm.

The reference spectra can be or can include recorded spectra obtained from measurements in operating systems.

The reference spectra can be or can include averages of recorded spectra obtained from measurements in operating systems.

The reference spectra can be or can include spectra determined by simulation.

The one or several machine specifics may be dependent on the application for which the machine is used. For illustration, the compression algorithm may be controlled differently depending on whether the machine is used for wastewater pumping, a fan, or wind turbine.

The one or several machine specifics may be dependent on ambient conditions. For illustration, the compression algorithm may be controlled differently depending on whether the machine is stationary or mobile. The compression algorithm may be controlled differently depending on whether the machine is mounted on a boat or train.

The method may further comprise receiving, by a data analytics computer, the compressed sensor data representation and analyzing, by the data analytics computer, the compressed sensor data representation. Analyzing the compressed sensor data representation may comprise execution a reconstruction to reconstruct the sensor data in the time domain from the compressed sensor data representation

The data analytics computer may determine at least one key performance indicator, KPI, of the machine.

The method may further comprise modifying, by the processing device, the applied compression technique responsive to feedback information from the data analytics computer. The feedback information may be indicative of a quality of the compressed sensor data representation, as determined by the data analytics computer after reconstruction.

Applying the compression technique may comprise applying an alignment transformation that may be dependent on the rotation speed to the spectral representation of the sensor data to align the spectral representation of the sensor data with at least one reference spectrum of a set of reference spectra.

The reference spectra can be or can include recorded spectra obtained from measurements in operating systems, spectra obtained by processing measured spectra (such as by averaging) and/or spectra obtained by performing system simulations.

Applying the compression technique may comprise determining a set of decomposition coefficients of a linear decomposition of the spectral representation of the sensor data.

The set of decomposition coefficients may be transmitted in the compressed sensor data representation.

The set of decomposition coefficients may be transmitted as the compressed sensor data representation, or may optionally be further compressed (using, e.g., a compression algorithm such as Lempel-Ziv-Welch (lzw), zip, run length encoding or other techniques) for transmission in the compressed sensor data representation.

When the set of decomposition coefficients is further compressed, lossless compression may be applied to generate the compressed sensor data representation from the set of decomposition coefficients.

Applying the compression technique may comprise identifying, based on the rotation speed, a set of peaks in the spectral representation of the sensor data and determining peak characteristics for each peak in the identified set of peaks.

The peak characteristics of the peaks included in the identified set of peaks are transmitted in the compressed sensor data representation.

The peak characteristics may be transmitted as the compressed sensor data representation, or may optionally be further compressed (using, e.g., a compression algorithm such as lzw, zip, run length encoding or other techniques) for transmission in the compressed sensor data representation.

When peak characteristics are further compressed, lossless compression may be applied to generate the compressed sensor data representation from the peak characteristics.

The at least one processing device may be a field sensor device.

The field sensor device may comprise a battery.

The field sensor device may be battery-powered.

The field sensor device may comprise a sensor adapted to output the sensor data.

The field sensor device may have a wireless interface to transmit the compressed sensor data representation.

The field sensor device may be adapted to receive feedback information at the wireless interface and to control the compression algorithm further in dependence on the feedback information.

The sensor may be adapted to measure an electrical, mechanical and/or chemical characteristic of a conductive member coupled to the machine.

The machine may be a generator or a motor.

The machine may be stationarily mounted.

The machine may be mounted on a vehicle.

A device for processing sensor data for transmission comprises an interface adapted to receive one or several operational parameters of a machine having a rotating component, the one or several operational parameters being different from the sensor data. The device comprises at least one processing circuit adapted to determine a compression technique that is to be applied to the sensor data as a function of the one or several operational parameters of the machine, the one or several operational parameters of the machine being distinct from the sensor data. The at least one processing circuit may be adapted to apply the determined compression technique to a spectral representation of the sensor data to generate a compressed sensor data representation. The device comprises output circuitry adapted to transmit the compressed sensor data representation.

The at least one processing circuit may be adapted to generate the spectral representation of the sensor data by transforming time-domain data into a frequency domain.

The at least one processing circuit may be adapted to modify the determined compression technique responsive to a trigger event. The trigger event may be expiry of a timer, a change in the operational parameter, or receipt of feedback relating to the quality of a signal reconstructed from the compressed sensor data representation.

The one or several operational parameters of the machine may comprise a rotation speed of the rotating component of the machine.

The at least one processing circuit may be adapted to modify the determined compression technique responsive to a change in the rotation speed.

The at least one processing circuit may be adapted to control the compression technique dependent on one or several machine specifics of the machine.

The one or several machine specifics may be dependent on which possible fault cases can occur. The information on possible fault cases may be based on historical sensor data. For illustration, reference spectra representing a set of several fault cases may be stored in the sensor device and may be used when executing the compression algorithm.

The reference spectra can be or can include recorded spectra obtained from measurements in operating systems, spectra obtained by processing measured spectra (such as by averaging) and/or spectra obtained by performing system simulations.

The one or several machine specifics may be dependent on the application for which the machine is used. For illustration, the compression algorithm may be controlled differently depending on whether the machine is used for wastewater pumping, a fan, or wind turbine.

The one or several machine specifics may be dependent on ambient conditions. For illustration, the compression algorithm may be controlled differently depending on whether the machine is stationary or mobile. The compression algorithm may be controlled differently depending on whether the machine is mounted on a boat or train.

The at least one processing circuit may be adapted to modify the applied compression technique responsive to feedback information from a data analytics computer. The feedback information may be indicative of a quality of the compressed sensor data representation, as determined by the data analytics computer after reconstruction.

The at least one processing circuit may be adapted to apply an alignment transformation that may be dependent on the rotation speed to the spectral representation of the sensor data to align the spectral representation of the sensor data with at least one reference spectrum of a set of reference spectra.

The reference spectra can be or can include recorded spectra obtained from measurements in operating systems, spectra obtained by processing measured spectra (such as by averaging) and/or spectra obtained by performing system simulations.

The at least one processing circuit may be adapted to determine a set of decomposition coefficients of a linear decomposition of the spectral representation of the sensor data.

The device may be adapted to transmit the set of decomposition coefficients as the compressed sensor data representation.

The at least one processing circuit may be adapted to identify, based on the rotation speed, a set of peaks in the spectral representation of the sensor data and determining peak characteristics for each peak in the identified set of peaks.

The device may be adapted to transmit the peak characteristics of the peaks included in the identified set of peaks as the compressed sensor data representation.

The device may be a field sensor device.

The device may comprise a battery.

The device may be battery-powered.

The output circuitry may comprise a wireless interface to transmit the compressed sensor data representation.

The device may be adapted to receive feedback information at the wireless interface and to control the compression algorithm further in dependence on the feedback information.

The device may comprise a sensor adapted to output the sensor data.

The sensor may be adapted to measure an electrical, mechanical and/or chemical characteristic of a conductive member coupled to the machine.

A system according to an embodiment comprises a machine having a rotating component and the device according to an embodiment.

The machine may be a generator or a motor.

The machine may be stationarily mounted.

The machine may be mounted on a vehicle.

The system may further comprise a data analytics computer.

The data analytics computer may be adapted to process the compressed sensor data representation. Processing the compressed sensor data representation may comprise execution a reconstruction to reconstruct the sensor data in the time domain from the compressed sensor data representation

The data analytics computer may be adapted to determine at least one key performance indicator, KPI, of the machine.

Various effects and advantages are attained by the methods and devices according to the invention. The methods and devices according to the invention are operative to perform compression in the frequency domain, i.e., compression applied to a spectral representation of sensor signal, while being responsive to changes in operational parameters of the machine. For illustration, the methods and devices according to embodiments allow efficient data compression to be performed for data that are dependent on a running speed of a machine, such as a generator or motor.

The techniques disclosed herein can be applied to various industrial systems, such as electric grids, microgrids, distributed energy resources, distribution or transmission networks, without being limited thereto.

BRIEF DESCRIPTION OF THE DRAWINGS

The subject-matter of the invention will be explained in more detail with reference to preferred exemplary embodiments which are illustrated in the attached drawings, in which:

Figure 1 is a block diagram representation of a system according to an embodiment.
Figure 2 is a data flow diagram according to an embodiment.
Figure 3 is a flow chart of a method according to an embodiment.
Figure 4 is an exemplary time diagram.
Figure 5 is a flow chart of a method according to an embodiment.
Figure 6 is a flow chart of a method according to an embodiment.
Figure 7 illustrates processing of frequency-domain data in an embodiment.
Figure 8 is a flow chart of a method according to an embodiment.
Figure 9 illustrates processing of frequency-domain data in an embodiment.

DETAILED DESCRIPTION OF EMBODIMENTS

Exemplary embodiments of the invention will be described with reference to the drawings in which identical or similar reference signs designate identical or similar elements. While some embodiments will be described in the context of specific industrial systems, electric power systems, transportation systems, or vessels, such as wind turbines or motors installed onboard a train or vessel, the embodiments are not limited thereto.

The features of embodiments may be combined with each other, unless specifically noted otherwise.

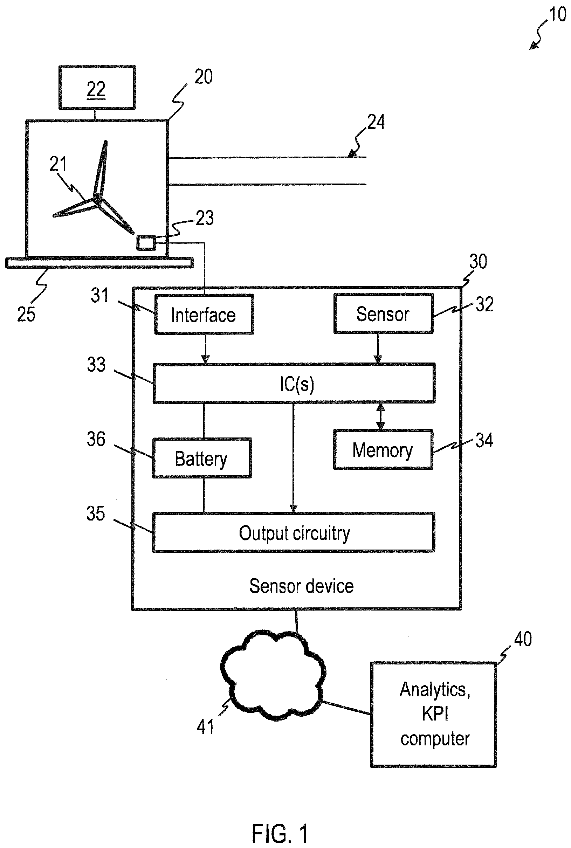

Figure 1 is a block diagram of a system 10. The system 10 comprises a machine 20. The machine 20 may have an operational parameter that is variable while the machine 20 is running. Variation of the operational parameter may influence sensor data captured using a sensor 32.

For illustration rather than limitation, the machine 20 may have a moving component, such as a rotating component 21. The rotating component may rotate with a rotation speed, which may be variable while the machine 20 is running. The rotation speed is exemplary for an operational parameter that may be used for controlling a compression algorithm applied to a spectral, i.e., frequency-domain, representation of the sensor data, as will be explained in more detail below.

While embodiments will be described in the context of a machine having a rotating component (such as a generator or a motor), with the operational parameter(s) including the rotating speed of the rotating component, the invention is not limited thereto. For illustration, the machine 20 may have a component that is reciprocating, and the operational parameter(s) used for controlling a compression algorithm may include the reciprocation frequency. The characteristic speed of a component of the machine 20 that undergoes a cyclic change will also be referred to as "running speed" herein.

The machine 20 may be a generator, e.g., a wind turbine, or a motor, e.g., a pump motor, that may be stationarily mounted. The machine 20 may be a motor or generator that may be mounted on a boat or train.

The system 10 includes a device 30, which may be a field sensor device. The device 30 has an interface 31 to receive one or several operational parameters of the machine 20, which are capable of affecting the sensor data sensed by the sensor 32. The interface 31 may be coupled to a measuring unit 23, which may measure the one or several operational parameters. The measuring unit 23 may comprise a rotation speed sensor. The measuring unit 23 may be comprised by the machine 20, may be integrated with the sensor device 30, or may be a device separate from both the machine 20 and the sensor device 30. Alternatively or additionally, the interface 31 may be coupled to a control unit 22 that controls operation of the machine 20 to receive the one or several operational parameters of the machine 20.

The sensor 32 of the device 30 may be integrated into a housing of the device 30 or may be otherwise associated with the device 30. The sensor 32 may be operative to sense at least one electrical, mechanical, and/or chemical parameter value of the machine 20. Alternatively or additionally, the sensor 32 may be operative to sense at least one electrical, mechanical, and/or chemical parameter value of a component 24 that is electrically coupled to the machine 20, such as a power line. Alternatively or additionally, the sensor 32 may be operative to sense at least one electrical, mechanical, and/or chemical parameter value of a component 25 that is mechanically coupled to the machine 20, such as a support or connecting structure attached to the machine 20.

The sensor 32 provides sensor data that are distinct from the operational parameter(s) of the machine 20, but which are influenced by the operational parameter(s) of the machine 20.

The sensor 32 may provide sensor data in the time domain. The sensor data may be time series data. A sampling interval between successive datums of the sensor data may be shorter, in particular much shorter, than the running speed of the machine 20.

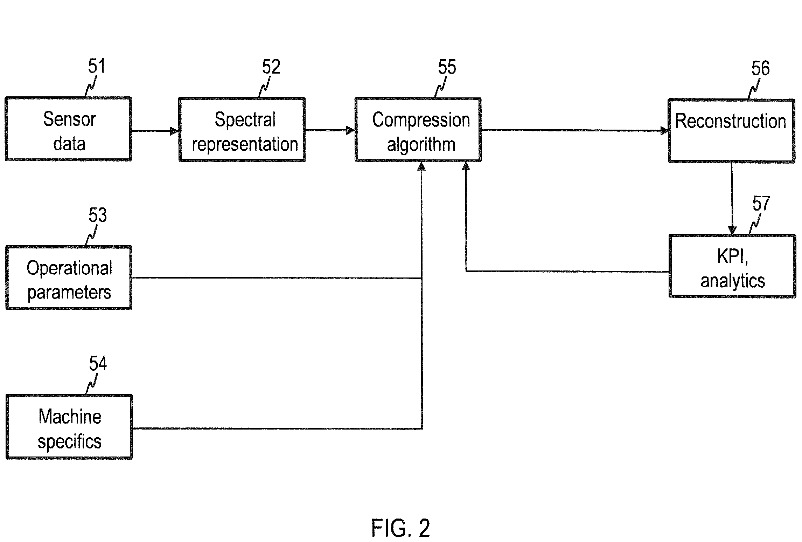

The device 30 comprises one or several integrated circuits (ICs) 33. The ICs may comprise one or several application specific integrated circuits (ASICs), processors, controllers, microprocessors, microcontrollers, or a combination thereof. The one or several ICs 33 operate as a processing device that computes a spectral representation of the sensor data, applies a compression algorithm, and adapts the compression algorithm in dependence on the one or several operating parameters of the machine 20, as will be described in more detail with reference to Figures 2 to 9.

The device 30 comprises a memory 34. The memory 34 may comprise a non-volatile memory. The memory 34 may store frequency-domain data that may be used for compressing the spectral representation of the sensor data. For illustration, one or several reference spectra associated with typical operating conditions (such as normal operation and/or various faults) may be stored in the memory 34, for use in the compression algorithm.

The one or several ICs 33 receive the time-domain sensor data and process the time-domain sensor data into a compressed sensor data representation, using a compression algorithm that is a function of the one or several operating parameters of the machine 20.

The device 30 may comprise output circuitry 35. The output circuitry 35 may comprise a transmit circuit, which may include a modulator and an antenna, to transmit the compressed sensor data representation.

The device 30 may include a further interface that allows machine specifics to be entered to the device 30. The machine specifics may reflect the specific use to which the machine 20 is installed (e.g., waste water pumping, fan, wind turbine), and/or specific fault cases (which may be based on a history of similar machines and uses), and/or specific ambient conditions (such as whether the machine 20 is stationarily mounted, mounted on a train, or mounted on a boat).

The device 30 may comprise input circuitry to receive from an analytics computer 40 feedback information. The IC(s) may use the feedback information to control the compression algorithm. The input circuitry and the output circuitry 35 in combination may form a wireless interface.

The system 10 comprises an analytics computer 40, which may be a server. The analytics computer 40 may have one or several processors to process the compressed sensor data representation received from the device 30 via a wired or wireless communication channel 41. The analytics computer 40 is adapted to reconstruct the sensor data (it being understood that there will typically be some information loss due to the compression) from the compressed sensor data representation and to further analyze the sensor data. The further analysis may include aggregation of sensor data from a large number, e.g., at least ten or at least fifty, sensors, and processing the aggregated sensor data.

Based on the analysis of the sensor data, the analytics computer 40 may identify existing or predicted future operating conditions of the machine 20 or of a system including the machine 20. The analytics computer 40 may suggest control parameters or may automatically set control parameters of the machine 20 or of a system including the machine 20.

The analytics computer 40 may be operative to determine a key performance indicator (KPI) of the machine 20. Various ways of determining KPIs of machines 20, such as generators or motors, are known to the skilled person, depending on the specific machine 20 and its application.

The analytics computer 40 may provide feedback to the device 30. The feedback may be indicative of an assessment of the quality of the reconstructed signal data determined by the analytics computer 40. In response to the feedback from the analytics computer 40, the IC(s) 33 of the device 30 may control the compression algorithm.

Operation of the device 30 will be described in more detail with reference to Figures 2 to 9 below.

Figure 2 is a data flow diagram representing the data processing by the device 30 and the analytics computer 40.

The device 30 may capture the sensor data 51 or may receive the sensor data 51. The sensor data 51 may be time series data.

The device 30 may compute a spectral representation 52 of the sensor data 51. Computing the spectral representation may comprise performing a Fourier transform (which may also be implemented as a Fast Fourier Transform (FFT), a Laplace transform, or other transforms from the time domain to the frequency domain.

As used herein, the term "spectral representation" refers to sensor data as a function of frequency, i.e., in the frequency domain. The spectral representation may be the result of a transformation of time-domain sensor data into the frequency domain. The spectral representation may be complex-valued, i.e., may include both a magnitude and a phase of a complex number for each frequency.

The device 30 applies a compression algorithm 55 to the spectral representation 53. The compression algorithm 55 is executed such that it depends on the operational parameter(s) of the machine 20. The mathematical operations applied to the spectral representation 51 by the compression algorithm 55 may be dependent on the operational parameter(s) of the machine 20. A change in the operational parameter(s), e.g., an increase of the rotation speed of the rotating component of the machine 20 from a first non-zero rotation speed to a second non-zero rotation speed may cause the mathematical operations applied to the spectral representation 51 by the compression algorithm 55 to change.

The operational parameter(s) 53 of the machine 20 are used to control the compression algorithm 55. The operational parameter(s) 53 may be used for performing spectrum alignment and/or identifying harmonics in the spectral representation of the sensor data, as will be explained in more detail below.

Optionally, machine specifics 54 may also be used to control the compression algorithm 55. The machine specifics 54 may be dependent on which possible fault cases can occur. The information on possible fault cases may be based on historical sensor data.

For illustration, reference spectra representing a set of several fault cases may be stored in the sensor device and may be used when executing the compression algorithm 55. The reference spectra can be or can include recorded spectra obtained from measurements in operating systems, spectra obtained by processing measured spectra (such as by averaging) and/or spectra obtained by performing system simulations.

The machine specifics 54 may be dependent on the application for which the machine is used. For illustration, the compression algorithm 55 may be controlled differently depending on whether the machine is used for wastewater pumping, a fan, or wind turbine. The machine specifics 54 may be dependent on ambient conditions. For illustration, the compression algorithm 55 may be controlled differently depending on whether the machine is stationary or mobile. The compression algorithm 55 may be controlled differently depending on whether the machine is mounted on a boat or train.

The output of the compression algorithm 55 is a compressed sensor data representation (it being understood that the compression is performed in the frequency domain, rather than the time domain). The compressed sensor data representation is transmitted to an analytics computer or other recipient, which may perform a reconstruction 56.

In the reconstruction 56, the sensor data 51 are reconstructed, typically with some loss of information due to the compression, from the compressed sensor data representation. The reconstruction involves transforming the uncompressed data back into the time domain, e.g., by applying an inverse Fourier transform, an inverse FFT, or an inverse Laplace transform.

The reconstructed sensor data may be used for further analysis and/or control functions 57. For illustration, the reconstructed sensor data may be used for determining a KPI of the machine 20 or of a system including the machine 20.

Optionally, feedback may be provided based on the results of the analytics or KPI detemiination performed remotely from the device 30. The feedback may be used by the device 30 to control the compression algorithm 55.

The compression algorithm 55 makes use of operational parameters 53 and, optionally, specifics 54 of the rotating machine to control the compression. The specifics 54 of the machine 20 may be dependent on the setup of the machine 20, e.g., on its installation location etc. When a feedback mechanism is implemented in which feedback information is input to the device 30 from the analytics computer 40, the compression algorithm 55 can be adapted to produce a compressed representation that gives rise to optimal KPI calculation or analytics.

The feedback can be implemented offline (e.g., during commissioning, development) or online (i.e., during operation).

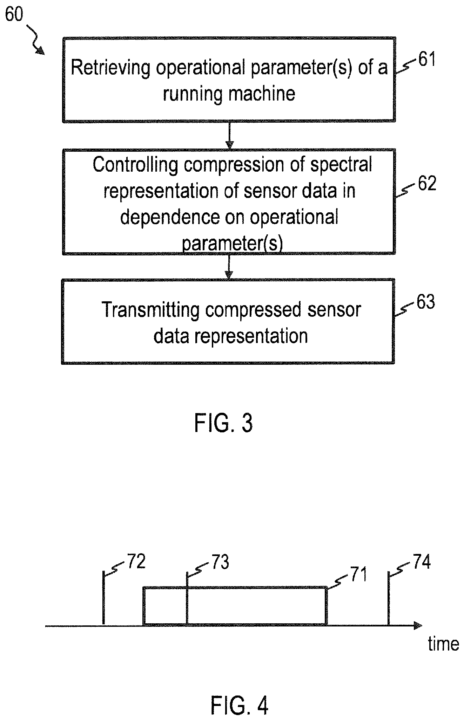

Figure 3 is a flow chart of a method 60 according to an embodiment. The method 60 may be performed automatically by the device 30.

At step 61, the device 30 retrieves one or several operational parameter(s) of the running machine 20. The operational parameter(s) may be or may include a running speed of the machine. The running speed may be the rotation speed of a component of the machine 20.

At step 62, the device 30 may control compression of the spectral representation of sensor data in dependence on the one or several operational parameter(s) of a running machine 20. The device 30 may have an integrated sensor 32 or may be coupled to a separate sensor that outputs the sensor data for compression prior to transmission.

At step 62, the compression of sensor data may optionally also be controlled in dependence on machine specifics, such as the installation location or possible fault types of the machine 20.

At step 63, the compressed sensor data representation (which is still in the frequency domain) is transmitted.

Sensor data sampled during a time interval must be used to determine the spectral representation. The one or several operational parameter(s) of the running machine 20 may, but do not need to be measured during that time interval, as will be explained with reference to Figure 4.

Figure 4 illustrates a time diagram. Sensor data sampled in a time interval 71, which may be a moving window, may be transformed into the spectral representation, so as to transform the sensor data into the frequency domain. When the operational parameter(s) of the running machine 20 are measured at a time 73 within the time interval 71, that measured value of the operational parameter(s) of the running machine 20 may determine how the compression algorithm is controlled for compressing the spectral representation of the sensor data captured within time interval 71. When the operational parameter(s) of the running machine 20 are measured at times 72, 74 before or after the time interval 71, extrapolation or interpolation techniques may be used to infer the operational parameter(s) of the running machine 20 at, e.g., the start, the center, or the end of the time interval 71. The compression algorithm may be controlled for compressing the spectral representation of the sensor data captured within time interval 71, using operations that are dependent on the operational parameter(s) of the running machine 20 extrapolated or interpolated from the measurements at times 72, 74.

The compression applied to the spectral representation of the sensor data may be adjusted as the operational parameter(s) of the running machine 20 vary. This may be done on an ongoing basis, e.g., intermittently at a repeat interval, and/or in response to trigger events such as detected changes in the operational parameter(s) of the running machine 20 and/or receipt of feedback.

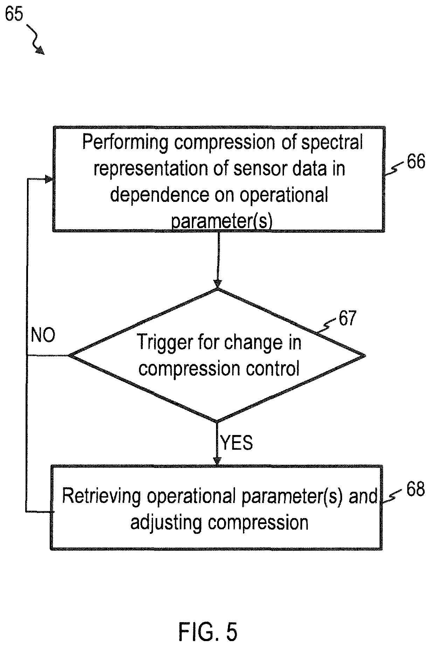

Figure 5 is a flow chart of a method 65 according to an embodiment. The method 65 may be performed automatically by the device 30.

At step 66, the device 30 performs compression of the spectral representation of sensor data in dependence on the one or several operational parameter(s) of the running machine 20. This may be done in such a way that the mathematical operations performed on the spectral representation vary when the one or several operational parameter(s) of the running machine 20 vary, e.g., when the running speed varies from a first non-zero running speed to a second non-zero running speed.

At step 67, the device 30 determines whether a trigger for a change in the compression algorithm is fulfilled. The trigger may be expiry of a timer, detection of a change in at least one of the operational parameters, detection of a change in at least one of the machine specifics, and/or receipt of feedback.

At step 68, the device 30 adjusts the compression in dependence on the value of the operational parameter(s) at the time at which the sensor data to be processed were captured.

The method returns to step 66.

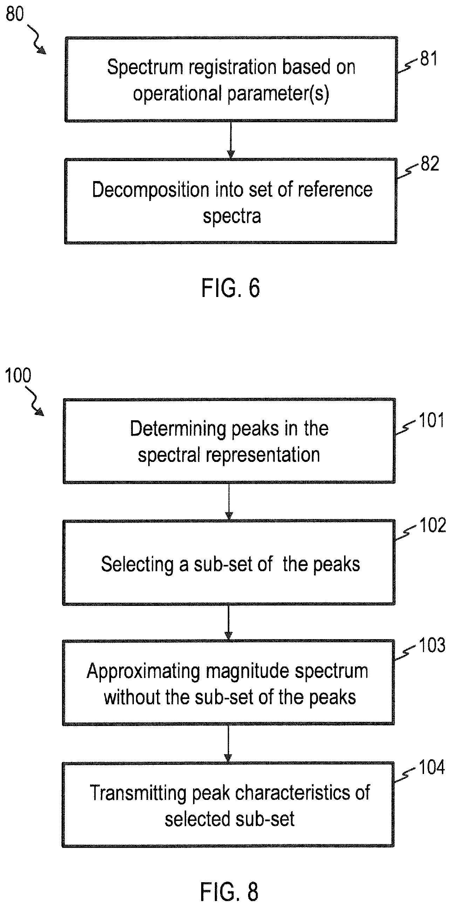

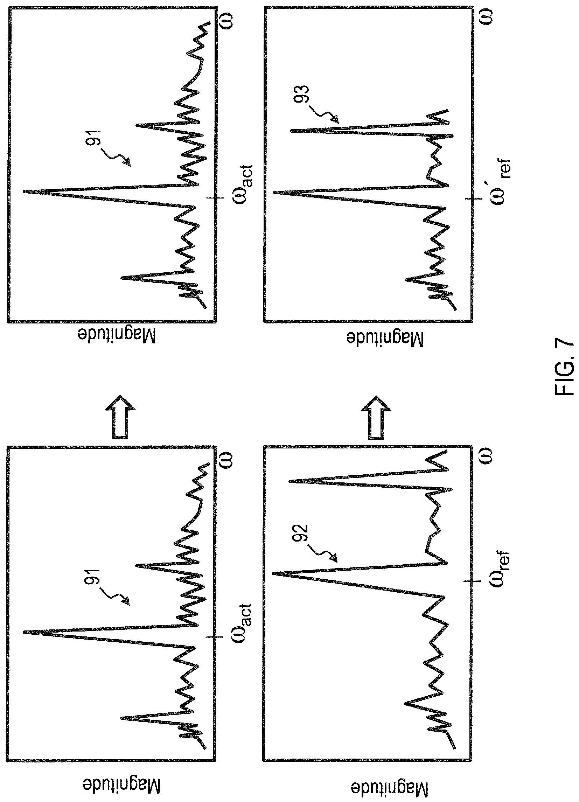

It will be appreciated that the operational parameter(s) of the running machine 20 may be used in various ways to adjust the compression, i.e., the mathematical operations, applied to the spectral representation of sensor data. The operational parameter(s) may be used to perform spectrum registration, as will be explained with reference to Figures 6 and 7. When performing spectrum alignment, a reference spectrum that may be stored in memory 34 and/or the spectral representation of the sensor data may be transformed in dependence on a ratio between the actual running speed (e.g., rotation speed) of the machine 20 and a reference speed at which the reference spectrum has been recorded. This facilitates a meaningful comparison of the spectral representation of the sensor data to one or several reference spectra. Such a comparison may be useful in computing a linear decomposition, without being limited thereto.

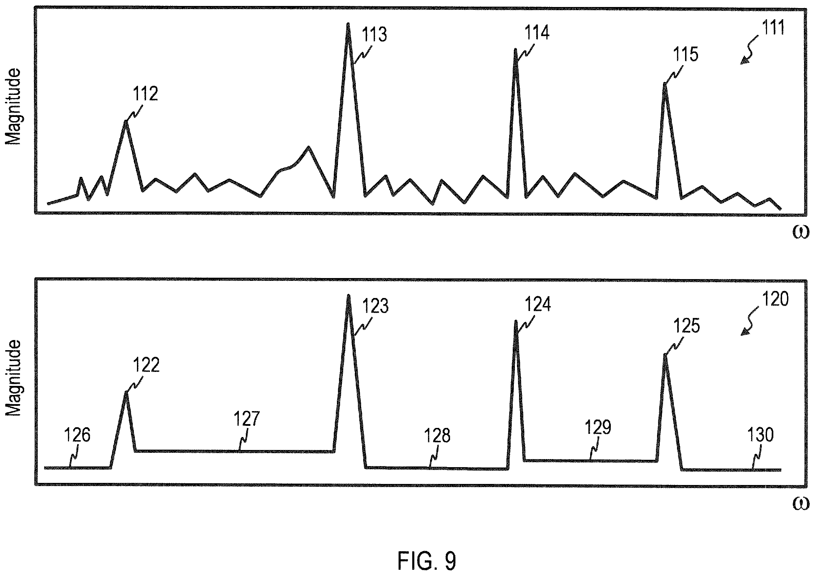

Alternatively or additionally, the operational parameter(s) may be used to determine which peaks in the spectral representation of the sensor data should be included in the compressed sensor data representation, as will be explained with reference to Figures 8 and 9.

Figure 6 is a flow chart of a method 80 according to an embodiment. The method 80 may be automatically performed by the device 30.

At step 81, a spectrum registration is performed. The spectrum registration, which may also be referred to as spectra warping, has the effect of warping a spectral representation of the sensor data or the magnitude of the spectral representation to a reference speed.

This operation requires knowledge of the actual rotating speed of the machine. The actual transformation of the spectrum may be represented as

$$A_T(k) = A(u(k)), \qquad\qquad (1)$$

where $A(\cdot)$ denotes a reference spectrum, $A_r(\cdot)$ denotes the transformed reference spectrum after spectrum registration, and $u(k)$ is a function that maps one frequency k to another frequency. Typically, u(k) may be a linear function

$$u(k) = k \cdot \lambda. \qquad\qquad (2)$$

The factor $\lambda$ is determined by the ratio of the reference speed of the machine 20 at which the reference spectrum has been recorded and the actual rotation speed of the machine 20 at the time at which the sensor data has been captured.

Figure 7 illustrates the effects of spectrum alignment. Figure 7 shows a magnitude of a spectral representation of the sensor data 91 and a magnitude of a reference spectrum 92, respectively as a function of frequency. The alignment may be implemented in such a way that the spectral representation of the sensor data 91 is not modified, but the magnitude of the reference spectrum 92 is transformed in accordance with Equation (1). This has the effect that a peak in the reference spectrum 92 originally located at a frequency $\omega_{ref}$ is shifted, in the transformed reference spectrum 93, to a frequency $\omega'_{ref}$ that corresponds to the actual rotating speed $\omega_{act}$ of the machine 20 when recording the sensor data of the spectral representation 91.

It will be appreciated that the transform for spectrum registration explained above is dependent on the actual running speed of the machine 20 and will vary when the actual running speed of the machine 20 varies, thereby affecting the compression algorithm.

An alignment or registration of the spectra allows the spectral representation of the sensor data to be quantitatively compared to one or several reference spectra. This may be particularly useful when determining coefficients of a linear decomposition.

While Figure 7 illustrates a case in which the reference spectra are transformed to perform frequency alignment with the spectral representation of the sensor data, in alternative implementations the spectral representation of the sensor data may be transformed to ensure frequency alignment with one or several reference spectra.

At step 82, the results of the spectrum registration may be used for performing compression. For illustration, a linear decomposition of the spectral representation of the sensor data may be determined. This may be done by determining decomposition coefficients $c_i$ such that

$$\sum_k \left\| SD(k) - \sum_{i=1}^N c_i \cdot A(u_i(k)) \right\|^2 \qquad (3)$$

is minimum. In Equation (3),

$k$ denotes the frequency (it being understood that the sum would be replaced by an integral for continuous frequencies);

$SD()$ denotes the spectral representation of the sensor data;

$A_i(\cdot)$ denotes an ith reference spectrum out of a set of N reference spectra;

$u_i(\cdot)$ is a function that performs frequency alignment of the ith reference spectrum with the spectral representation of the sensor data, which depends on the ratio of the reference speed of the machine 20 at which the ith reference spectrum has been recorded and the actual rotation speed of the machine 20 at the time at which the sensor data has been captured, as has been explained above; and

$c_i$ denote the linear decomposition coefficients that are to be determined and that, in combination, may be transmitted as or in the compressed sensor data representation.

Optionally, the set of decomposition coefficients may be input to a further compression algorithm, such as lzw, zip, run length encoding or other techniques, to generate the compressed sensor data representation from the set of decomposition coefficients.

When the set of decomposition coefficients is further compressed, lossless compression may be applied to generate the compressed sensor data representation from the set of decomposition coefficients.

It will be appreciated that various modifications can be used. For illustration, regularization may be used by determining decomposition coefficients $c_i$ such that

$$\sum_k \left\| SD(k) - \sum_{i=1}^N c_i \cdot A(u_i(k)) \right\|^2 + R(c_1, c_2, \ldots) \qquad (4)$$

is minimum, where $R(\cdot)$ denotes a regularization term. Alternatively or additionally, while spectral decomposition may be computed so as to minimize the $L_2$ metric, as illustrated with reference to Equations (2) and (3), the linear decomposition may be computed such that it minimizes another metric, such as $L_n$ metrics, without being limited thereto. Equations (5) and (6) are exemplary for cost functions that can be minimized in step 82, where $M(\cdot)$ denotes a metric that quantities a deviation of the spectral representation of the sensor data from the linear decomposition:

$$M\left(SD(k), \sum_{i=1}^N c_i \cdot A(u_i(k))\right) \qquad (5)$$

$$M\left(SD(k), \sum_{i=1}^N c_i \cdot A(u_i(k))\right) + R(c_1, c_2, \ldots) \qquad (6)$$

Various techniques can be employed to solve the optimization problem of any one of Equations (3) to (6), as will be appreciated. For example, gradient descent techniques may be used.

Other terms may be used in the cost function that is minimized, e.g., to weight the importance of different fault cases and their associated reference spectra $A_i(\cdot)$.

It will be appreciated that, by representing each obtained spectrum by a combination of a few carefully selected prototype reference spectra, significant compression can be obtained. It is sufficient to transmit the linear decomposition coefficients. The reference spectra can be chosen so as to represent a set of possible failure cases. This may be done so as to provide maximum information in a small set of linear decomposition coefficients. Various techniques, such as archetype analysis, ICA, PCA, and/or NMF may be used.

The set of reference spectra $A_i(\cdot)$ denote a basis for the linear decomposition and are chosen such as to allow for informative determination of failure cases and/or other suitable analytics.

Figure 8 is a flow chart of a method 100 according to an embodiment. The method 100 may be automatically performed by the device 30.

The method 100 operates on a spectral representation of the sensor data. The actual rotation speed information of the machine 20 may be used to find all harmonic peaks within the obtained spectral representation of the sensor data. Peak characteristics (such as maximum and peak width and/or peak area) may be transmitted in the compressed sensor data representation.

Information on the signal background/floor may additionally be included in the compressed sensor data representation.

Additionally or alternatively, the peak characteristics and/or signal background/floor may be input to a compression algorithm, in particular a lossless compression algorithm, to generate the sensor data representation.

The following processes may be used.

Prior to step 101, a background estimation may optionally be performed. This may comprise smoothing of a magnitude of the spectral representation of the sensor data. A width of the smoothing function or filter that is applied to the spectrum magnitude of the spectral representation of the sensor data is broader than the width of the individual peaks.

At step 101, peaks may be identified. This may comprise determining frequencies at which the magnitude of the spectral representation is greater than the background by at least a certain threshold factor. Alternatively or additionally, harmonic peak locations derived from the running speed of the machine 20 may be used to identify the peaks.

After step 101 and prior to step 102, the set of peaks identified at step 101 may optionally be reduced. This may include, without limitation, non-maxima suppression and/or reducing multiple neighboring peak values to a single peak representation.

At step 102, a sub-set of the previously identified peaks may be selected for compression. The size of the sub-set may be determined in dependence on a desired compression ratio. Peak characteristics, such as peak maximum value and peak width (e.g., full width at half max) and/or spectral weight (i.e., the area of the peak) may be determined for the sub-set.

At step 103, the magnitude of the spectral representation without the sub-set of peaks may be approximated. This may comprise determining a piece-wise constant floor signal, that may optionally have a varying size of the constant portions.

At step 104, the peak characteristics of the sub-set selected at step 102 is transmitted in the compressed sensor data representation. The peak characteristics may include the peak maximum value and peak width (e.g., full width at half max) or spectral weight (i.e., the area of the peak) for each peak in the sub-set, but not for other peaks. Compressed information on the background may optionally also be included in the compressed sensor data representation. The compressed information on the background may define a piece-wise constant function.

The compressed sensor data representation may be the peak characteristics and optionally the compressed information on the background. Alternatively or additionally, the peak characteristics and optionally the compressed information on the background may be input to a compression algorithm to generate the compressed sensor data representation.

Figure 9 illustrates the use of the actual running speed of the machine 20 when computing a small number of parameters that include the essential information contained in a spectral representation 111 of the sensor data. The spectral representation 111 includes dominant peaks 112-115 and smaller peaks.

Compression of the spectral representation 111, using the technique of Figure 8, includes determining a sub-set of all peaks, using the actual rotating speed. For illustration, the dominant peaks 112-115 may be easily identified thereby. The magnitude between these peaks may be approximated by piece-wise constant functions, which may, but do not need to extend from one peak to another peak.

Figure 9 also illustrates the reconstructed spectrum 120 that may be determined from a compressed sensor data representation. Peak heights and peak widths of the dominant peaks 122-125 provide an approximation to the dominant peaks 112-115 in the spectral representation. Piece-wise constant functions 126-130 approximate the background between the dominant peaks. The essential characteristics of the spectrum 111 may be provided for remote analysis, while attaining a high compression ratio.

By applying conventional compression techniques to the peak heights, peak widths and optional the background signal levels 126-130, the amount of data to be transmitted may be reduced further.

The selection of peaks for which peak characteristics are to be transmitted may also be dependent on the KPI or other analysis that is performed on the receiving side of the transmission.

Embodiments of the invention are adapted for compression of spectral information of recorded data to reduce the amount of bulk data transfer. The compression is dynamically controlled by operational parameters of the machine, e.g. speed of rotation, to achieve high compression rates and fidelity, adaptive to the actual machine. Compressed data provides richer information for remote analytics than a few predefined parameters, but still reduces the amount of data to be transferred and thus saves energy and bandwidth. Optionally, compression can be specifically optimized to allow for high-fidelity reconstruction of pre-defined condition parameters at the remote end compared to wasteful generic signal reconstruction.

The compression may be performed on a sensor device for cloud-based or on-premise analytics.

While the invention has been described in detail in the drawings and foregoing description, such description is to be considered illustrative or exemplary and not restrictive. Variations to the disclosed embodiments can be understood and effected by those skilled in the art and practicing the claimed invention, from a study of the drawings, the disclosure, and the appended claims. In the claims, the word "comprising" does not exclude other elements or steps, and the indefinite article "a" or "an" does not exclude a plurality. The mere fact that certain elements or steps are recited in distinct claims does not indicate that a combination of these elements or steps cannot be used to advantage, specifically, in addition to the actual claim dependency, any further meaningful claim combination shall be considered disclosed.

**Claims**

1. A method of processing sensor data for transmission, the method comprising:

   receiving, by at least one processing device (33-35), one or several operational parameters of a machine (20) having a rotating component, the one or several operational parameters of the machine (20) being distinct from the sensor data, wherein the sensor data represent data that are measured on said machine and that are influenced by the one or several operational parameters of the machine;
   applying, by at least one processing device (33-35), a compression technique to a spectral representation of the sensor data to generate a compressed sensor data representation, wherein the applied compression technique is dependent on the one or several operational parameters of the machine (20); and
   transmitting, by the at least one processing device (33-35), the compressed sensor data representation.

2. The method of claim 1, wherein the sensor data is time-domain data and the method further comprises generating the spectral representation of the sensor data by transforming the time-domain data into a frequency domain.

3. The method of claim 1 or claim 2, wherein the one or several operational parameters of the machine (20) comprise a rotation speed of the rotating component (21) of the machine (20).

4. The method of claim 3, further comprising modifying the applied compression technique responsive to a change in the rotation speed.

5. The method of any one of the preceding claims, wherein the applied compression technique is further dependent on one or several machine (20) specifics of the machine (20).

6. The method of claim 5, wherein the one or several machine (20) specifics are selected from a group consisting of fault cases, application type of the machine (20), ambient conditions.

7. The method of any one of the preceding claims, further comprising
receiving, by a data analytics computer (40), the compressed sensor data representation and analyzing, by the data analytics computer (40), the compressed sensor data representation.

8. The method of claim 7, wherein the data analytics computer (40) determines at least one key performance indicator, KPI, of the machine (20).

9. The method of claim 7 or claim 8, further comprising modifying, by the processing device (33-35), the applied compression technique responsive to feedback information from the data analytics computer (40).

10. The method of any one of the preceding claims, wherein the one or several operational parameters comprise a rotation speed of the rotating component (21) of the machine (20), and

    wherein applying the compression technique comprises:

       applying an alignment transformation that is dependent on the rotation speed to the spectral representation of the sensor data to align the spectral representation of the sensor data with at least one reference spectrum of a set of reference spectra, and
determining a set of decomposition coefficients of a linear decomposition of the spectral representation of the sensor data,

wherein the set of decomposition coefficients is transmitted in the compressed sensor data representation.

11. The method of any one of the preceding claims, wherein the one or several operational parameters comprise a rotation speed of the rotating component (21) of the machine (20),

wherein applying the compression technique comprises identifying, based on the rotation speed, a set of peaks in the spectral representation of the sensor data and determining peak characteristics for each peak in the identified set of peaks,
wherein the peak characteristics of the peaks included in the identified set of peaks are transmitted in the compressed sensor data representation.

12. The method of any one of the preceding claims, wherein the at least one processing device (33-35) is a field sensor device.

13. The method of any one of the preceding claims, wherein the machine (20) is a generator or a motor.

14. A device for processing sensor data for transmission, comprising:

an interface (31) adapted to receive one or several operational parameters of a machine (20) having a rotating component (21), the one or several operational parameters being different from the sensor data, wherein the sensor data represent data that are measured on said machine and that are influenced by the one or several operational parameters of the machine;
at least one processing circuit adapted to

determine a compression technique that is to be applied to the sensor data as a function of the one or several operational parameters of the machine (20), the one or several operational parameters of the machine (20) being distinct from the sensor data, and
apply the determined compression technique to a spectral representation of the sensor data to generate a compressed sensor data representation; and

output circuitry adapted to transmit the compressed sensor data representation.

15. A system, comprising:

a machine (20) having a rotating component (21), in particular a motor or a generator; and
the device of claim 14.

**Patentansprüche**

1. Verfahren zum Verarbeiten von Sensordaten zur Übertragung, wobei das Verfahren umfasst:

Empfangen, durch mindestens eine Verarbeitungsvorrichtung (33-35), eines oder mehrerer Betriebsparameter einer Maschine (20) mit einer rotierenden Komponente, wobei der eine oder die mehreren Betriebsparameter der Maschine (20) von den Sensordaten verschieden sind, wobei die Sensordaten Daten repräsentieren, die an der Maschine gemessen werden und die durch den einen oder die mehreren Betriebsparameter der Maschine beeinflusst werden;
Anwenden, durch mindestens eine Verarbeitungsvorrichtung (33-35), einer Komprimierungstechnik an einer spektralen Repräsentation der Sensordaten, um eine komprimierte Sensordatenrepräsentation zu erzeugen, wobei die angewendete Komprimierungstechnik von dem einen oder den mehreren Betriebsparametern der Maschine (20) abhängt; und
Übertragen, durch die mindestens eine Verarbeitungsvorrichtung (33-35), der komprimierten Sensordatenrepräsentation.

**2.** Verfahren nach Anspruch 1, wobei die Sensordaten Zeitbereichsdaten sind und das Verfahren ferner Erzeugen der spektralen Repräsentation der Sensordaten durch Transformieren der Zeitbereichsdaten in einen Frequenzbereich umfasst.

**3.** Verfahren nach Anspruch 1 oder Anspruch 2, wobei der eine oder die mehreren Betriebsparameter der Maschine (20) eine Rotationsgeschwindigkeit der rotierenden Komponente (21) der Maschine (20) umfassen.

**4.** Verfahren nach Anspruch 3, ferner umfassend Modifizieren der angewendeten Komprimierungstechnik als Reaktion auf eine Änderung der Rotationsgeschwindigkeit.

**5.** Verfahren nach einem der vorstehenden Ansprüche, wobei die angewendete Komprimierungstechnik ferner von einer oder mehreren Maschinen(20)-Spezifika der Maschine (20) abhängt.

**6.** Verfahren nach Anspruch 5, wobei die eine oder die mehreren Maschinen(20)-Spezifika aus einer Gruppe ausgewählt werden, die aus Fehlerfällen, Anwendungstyp der Maschine (20), Umgebungsbedingungen besteht.

**7.** Verfahren nach einem der vorstehenden Ansprüche, ferner umfassend

Empfangen, durch einen Datenanalysecomputer (40), der komprimierten Sensordatenrepräsentation, und
Analysieren, durch den Datenanalysecomputer (40), der komprimierten Sensordatenrepräsentation.

**8.** Verfahren nach Anspruch 7, wobei der Datenanalysecomputer (40) mindestens eine Leistungskennzahl, KPI, der Maschine (20) bestimmt.

**9.** Verfahren nach Anspruch 7 oder Anspruch 8, ferner umfassend Modifizieren, durch die Verarbeitungsvorrichtung (33-35), der angewendeten Komprimierungstechnik als Reaktion auf Rückmeldeinformationen vom Datenanalysecomputer (40).

**10.** Verfahren nach einem der vorstehenden Ansprüche, wobei der eine oder die mehreren Betriebsparameter eine Rotationsgeschwindigkeit der rotierenden Komponente (21) der Maschine (20) umfassen, und
wobei das Anwenden der Komprimierungstechnik umfasst:

Anwenden einer Ausrichtungstransformation, die von der Rotationsgeschwindigkeit abhängt, an der spektralen Repräsentation der Sensordaten, um die spektrale Repräsentation der Sensordaten mit mindestens einem Referenzspektrum eines Satzes von Referenzspektren auszurichten, und
Bestimmen eines Satzes von Zerlegungskoeffizienten einer linearen Zerlegung der spektralen Repräsentation der Sensordaten,
wobei der Satz von Zerlegungskoeffizienten in der komprimierten Sensordatenrepräsentation übertragen wird.

**11.** Verfahren nach einem der vorstehenden Ansprüche, wobei der eine oder die mehreren Betriebsparameter eine Rotationsgeschwindigkeit der rotierenden Komponente (21) der Maschine (20) umfassen,

wobei das Anwenden der Komprimierungstechnik Identifizieren, basierend auf der Rotationsgeschwindigkeit, eines Satzes von Spitzen in der spektralen Repräsentation der Sensordaten und Bestimmen von Spitzencharakteristiken für jede Spitze im identifizierten Satz von Spitzen umfasst,
wobei die Spitzencharakteristiken der im identifizierten Satz von Spitzen eingeschlossenen Spitzen in der komprimierten Sensordatenrepräsentation übertragen werden.

**12.** Verfahren nach einem der vorstehenden Ansprüche, wobei die mindestens eine Verarbeitungsvorrichtung (33-35) eine Feldsensorvorrichtung ist.

**13.** Verfahren nach einem der vorstehenden Ansprüche, wobei die Maschine (20) ein Generator oder ein Motor ist.

**14.** Vorrichtung zum Verarbeiten von Sensordaten zur Übertragung, umfassend:

eine Schnittstelle (31), die ausgebildet ist zum Empfangen eines oder mehrerer Betriebsparameter einer Maschine (20) mit einer rotierenden Komponente (21), wobei sich der eine oder die mehreren Betriebsparameter von den Sensordaten unterscheiden, wobei die Sensordaten Daten repräsentieren, die an der Maschine gemessen werden und die durch den einen oder die mehreren Betriebsparameter der Maschine beeinflusst werden;

mindestens eine Verarbeitungsschaltung, die ausgebildet ist zum

Bestimmen einer Komprimierungstechnik, die an den Sensordaten angewendet werden soll, als eine Funktion des einen oder der mehreren Betriebsparameter der Maschine (20), wobei der eine oder die mehreren Betriebsparameter der Maschine (20) von den Sensordaten verschieden sind, und

Anwenden der bestimmten Komprimierungstechnik an einer spektralen Repräsentation der Sensordaten, um eine komprimierte Sensordatenrepräsentation zu erzeugen; und eine Ausgabeschaltungsanordnung, die ausgebildet ist zum Übertragen der komprimierten Sensordatenrepräsentation.

**15.** System, umfassend:

eine Maschine (20) mit einer rotierenden Komponente (21), insbesondere ein Motor oder ein Generator; und die Vorrichtung nach Anspruch 14.


**Revendications**

**1.** Procédé de traitement de données capteurs en vue de leur transmission, le procédé comprenant :

la réception, par au moins un dispositif de traitement (33-35), d'un ou de plusieurs paramètres de fonctionnement d'une machine (20) pourvue d'un élément constitutif tournant, les un ou plusieurs paramètres de fonctionnement de la machine (20) étant distincts des données capteurs, les données capteurs représentant des données qui sont mesurées sur ladite machine et qui sont influencées par les un ou plusieurs paramètres de fonctionnement de la machine ;

l'application, par au moins un dispositif de traitement (33-35), d'une technique de compression à une représentation spectrale des données capteurs pour générer une représentation comprimée des données capteurs, la technique de compression appliquée étant fonction des un ou plusieurs paramètres de fonctionnement de la machine (20) ; et

la transmission, par l'au moins un dispositif de traitement (33-35), de la représentation comprimée des données capteurs.

**2.** Procédé selon la revendication 1, les données capteurs étant des données dans un domaine temporel et le procédé comprenant en outre la génération de la représentation spectrale des données capteurs par transformation, dans un domaine fréquentiel, des données dans un domaine temporel.

**3.** Procédé selon la revendication 1 ou la revendication 2, les un ou plusieurs paramètres de fonctionnement de la machine (20) comprenant une vitesse de rotation de l'élément constitutif tournant (21) de la machine (20).

**4.** Procédé selon la revendication 3, comprenant en outre la modification de la technique de compression appliquée en réponse à une variation de la vitesse de rotation.

**5.** Procédé selon l'une quelconque des revendications précédentes, la technique de compression appliquée étant fonction en outre d'une ou de plusieurs spécificités de la machine (20) de la machine (20).

**6.** Procédé selon la revendication 5, les une ou plusieurs spécificités de la machine (20) étant sélectionnées dans le groupe comprenant des cas de défaillance, un type d'application de la machine (20), des conditions ambiantes.

**7.** Procédé selon l'une quelconque des revendications précédentes, comprenant en outre

la réception, par un ordinateur d'analyse de données (40), de la représentation comprimée des données capteurs et

l'analyse, par l'ordinateur d'analyse de données (40), de la représentation comprimée des données capteurs.

**8.** Procédé selon la revendication 7, l'ordinateur d'analyse de données (40) déterminant au moins un indicateur clé de performance, noté KPI, de la machine (20).

**9.** Procédé selon la revendication 7 ou la revendication 8, comprenant en outre la modification, par le dispositif de traitement (33-35), de la technique de compression appliquée en réponse à des informations de retour provenant de l'ordinateur d'analyse de données (40).

**10.** Procédé selon l'une quelconque des revendications précédentes, les un ou plusieurs paramètres de fonctionnement comprenant une vitesse de rotation de l'élément constitutif tournant (21) de la machine (20), et l'application de la technique de compression comprenant :

l'application d'une transformation d'alignement qui est fonction de la vitesse de rotation à la représentation spectrale des données capteurs pour aligner la représentation spectrale des données capteurs avec au moins un spectre de référence d'un ensemble de spectres de référence, et la détermination d'un ensemble de coefficients de décomposition d'une décomposition linéaire de la représentation spectrale des données capteurs, l'ensemble de coefficients de décomposition étant transmis dans la représentation comprimée des données capteurs.

**11.** Procédé selon l'une quelconque des revendications précédentes, les un ou plusieurs paramètres de fonctionnement comprenant une vitesse de rotation de l'élément constitutif tournant (21) de la machine (20), l'application de la technique de compression comprenant l'identification, sur la base de la vitesse de rotation, d'un ensemble de pics dans la représentation spectrale des données capteurs et la détermination de caractéristiques de pic pour chaque pic dans l'ensemble de pics identifié, les caractéristiques de pic des pics contenus dans l'ensemble de pics identifié étant transmises dans la représentation comprimée des données capteurs.

**12.** Procédé selon l'une quelconque des revendications précédentes, l'au moins un dispositif de traitement (33-35) étant un dispositif capteur in situ.

**13.** Procédé selon l'une quelconque des revendications précédentes, la machine (20) étant un générateur ou un moteur électrique.

**14.** Dispositif de traitement de données capteurs en vue de leur transmission, comprenant :

une interface (31) adaptée à recevoir un ou plusieurs paramètres de fonctionnement d'une machine (20) pourvue d'un élément constitutif tournant (21), les un ou plusieurs paramètres de fonctionnement étant différents des données capteurs, les données capteurs représentant des données qui sont mesurées sur ladite machine et qui sont influencées par les un ou plusieurs paramètres de fonctionnement de la machine ; au moins un circuit de traitement adapté à déterminer une technique de compression qui est appelée à être appliquée aux données capteurs en fonction des un ou plusieurs paramètres de fonctionnement de la machine (20), les un ou plusieurs paramètres de fonctionnement de la machine (20) étant distincts des données capteurs, et appliquer la technique de compression déterminée à une représentation spectrale des données capteurs pour générer une représentation comprimée des données capteurs ; et une circuiterie de sortie adaptée à transmettre la représentation comprimée des données capteurs.

**15.** Système, comprenant :

une machine (20) pourvue d'un élément constitutif tournant (21), plus particulièrement un moteur électrique ou un générateur ; et le dispositif selon la revendication 14.

FIG. 1

FIG. 2

60

Retrieving operational parameter(s) of a running machine    ⌐61

Controlling compression of spectral representation of sensor data in dependence on operational parameter(s)    ⌐62

Transmitting compressed sensor data representation    ⌐63

FIG. 3

⌐72    ⌐73    ⌐71    ⌐74

time

FIG. 4

FIG. 5

80

┌─────────────────────────────────────┐
│                                      │  ⤷81
│   Spectrum registration based on     │
│      operational parameter(s)        │
│                                      │
└─────────────────────────────────────┘
                    │
                    ▼
┌─────────────────────────────────────┐
│                                      │  ⤷82
│   Decomposition into set of reference│
│              spectra                 │
│                                      │
└─────────────────────────────────────┘

FIG. 6

100

┌─────────────────────────────────────┐
│                                      │  ⤷101
│      Determining peaks in the        │
│      spectral representation         │
│                                      │
└─────────────────────────────────────┘
                    │
                    ▼
┌─────────────────────────────────────┐
│                                      │  ⤷102
│     Selecting a sub-set of the peaks │
│                                      │
└─────────────────────────────────────┘
                    │
                    ▼
┌─────────────────────────────────────┐
│                                      │  ⤷103
│   Approximating magnitude spectrum   │
│   without the sub-set of the peaks   │
│                                      │
└─────────────────────────────────────┘
                    │
                    ▼
┌─────────────────────────────────────┐
│                                      │  ⤷104
│  Transmitting peak characteristics of│
│          selected sub-set            │
│                                      │
└─────────────────────────────────────┘

FIG. 8

FIG. 7

FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100325132 A1
- US 20180091630 A1
- US 20130073261 A1
- AU 2019100541 A4
- EP 1770853 A2

**Non-patent literature cited in the description**

- **M.A. RAZZAQUE** ; **C. BLEAKLEY** ; **S. DOBSON**. Compression in wireless sensor networks: A survey and comparative evaluation.. *ACM Transactions on Sensor Networks (TOSN)*, 2013
- **T. SRISOOKSAI** ; **K. KEAMARUNGSI** ; **P. LAMSRI-CHAN** ; **K. ARAKI**. Practical data compression in wireless sensor networks: A survey. *Journal of Network and Computer Applications*, January 2012, vol. 35 (1), 37-59